# EUROPÄISCHE PATENTSCHRIFT

(11) **EP 0 355 515 B1**
(45) Veröffentlichungstag und Bekanntmachung des Hinweises auf die Patenterteilung: **18.01.1995**
(21) Anmeldenummer: 89114317.4
(22) Anmeldetag: 03.08.1989
(51) Int. Cl.: D21J 1/16, D21J 5/00

(54) **Verfahren zur Herstellung stark verformter Fahrzeuginnenverkleidungsträger aus Holzfaserformstoff**
Method of producing highly deformed vehicle interior lining supports from wood fibre moulding material
Procédé de fabrication d'un support de revêtement intérieur de véhicule fortement déformé en matière à mouler en fibres de bois

(30) Priorität: 24.08.1988 DE 3828655
(43) Veröffentlichungstag der Anmeldung: 28.02.1990
(73) Patentinhaber: Deutsche Fibrit Gesellschaft Ebers & Dr. Müller mbH, 47799 Krefeld (DE)
(72) Erfinder: Anton, Rainer, D-2123 Bardowick (DE); Harneit, Dieter, D-2121 Neetze (DE)
(74) Vertreter: Cohausz & Florack Patentanwälte

(56) Entgegenhaltungen:
- EP-A- 0 089 013
- DE-B- 1 194 133
- GB-A- 875 870
- US-A- 2 870 543
- US-A- 3 386 879

## Beschreibung

Die Erfindung bezieht sich auf das Verfahren zur Herstellung stark verformter Fahrzeuginnenverkleidungsträger mit beidseitig glatten Oberflächen auf der Basis defibrierter Holzfasern durch Anschwemmen einer wäßrigen Holzfaserstoffsuspension an ein Vorformsieb, Trocknen des Vorformlings, Pressen und Härten.

Das bekannte Naßpreßverfahren zur Herstellung von Holzfaser-Formteilen "Taschenbuch der Spanplattentechnik" von H.J. Deppe und K. Ernst, 2. Aufl. (1977), DRW-Verlag Leinfelden, S. 252 hat sich bei der Erzeugung von Fahrzeuginnenverkleidungsträgern bewährt Nicht zuletzt das hohe Maß an Gestaltungsfreiheit mit sehr tiefen Verformungen und die erzielbare Teilegröße tragen dazu bei. Ein wesentlicher Mangel resultiert aus dem letzten Arbeitsschritt. Relativ langes Trockenpressen in heißen Formwerkzeugen ist erforderlich, weil dem Wasser über mindestens eine Siebseite die Möglichkeit gegeben werden muß, dampfförmig zu entweichen. Dort verbleibt am Fertigteil das Abbild der Siebstruktur. Schieber oder ähnliche Hilfsgeräte, wie sie beispielsweise zur Ausgestaltung von bestimmten Kanten oder Hinterschnitten benötigt werden, verbieten sich im Siebbereich, und qualitätsverbessernde Chemikalien oder Hilfsmittel können der Bütte nur in engen Maßen zugegeben werden, um das Abdampfen des Wassers nicht zu stören. Ein betriebstechnischer Nachteil ist ferner, daß in "Preßstraßen" gearbeitet werden muß, weil eine Zwischenlagerung der Vorformlinge nicht möglich ist. Daher ist für einen Artikel immer hoher Maschineneinsatz ohne garantierte Vollauslastung erforderlich.

Bei einem anderen Verfahren, EP-0 089 013 C2, tritt der erstgenannte Nachteil nicht auf. Das dort erwähnte Trockenpreßverfahren erlaubt die großtechnisch praktizierte Herstellung beidseitig glatter Verkleidungsteilträger und den Einbau von Schiebern o.ä. im Formwerkzeug.

Seine Nachteile sind die praktische Einengung hinsichtlich eines wünschenswerten Verformungsgrades, besonders bezüglich der Formteiltiefe, wie sie für moderne Innenverkleidungsteile von der Fahrzeugindustrie, z.B. an Schalttafeln oder Türverkleidungen, gefordert wird, und das betriebstechnisch unerwünschte Fehlen von Transport- und/oder Lagerfähigkeit der Vorformlinge.

Der Erfindung liegt nun die Aufgabe zugrunde, ein Verfahren der gattungsgemäßen Art anzugeben, bei dem alle Vorteile des Naßpreßverfahrens erhalten bleiben, ohne daß diesem oder einem Trockenpreßverfahren anhaftende Nachteile in Kauf genommen werden müssen und daß die Produktion der Vorformlinge räumlich und zeitlich von der Endverpressung zum Träger entkoppelt wird, um neue optimale betriebswirtschaftliche Grundlagen zu schaffen.

Die Aufgabe wird erfindungsgemäß dadurch gelöst, daß eine wäßrige Holzfaserstoffsuspension, die auch bekannte Chemikalien und Hilfsstoffe enthält, formangeschwemmt und auf einen Restwassergehalt von 20 bis 50 Masse-%, bezogen auf die ursprünglich angeformte Suspensionsmenge, entwässert wird, und der entstandene Vorformling einer elektrischen Wechselfeldtrocknung, wie sie beispielsweise in K. Kröll: "Trockner u. Trocknungsverfahren" 2. Aufl. (1978) Springer-Verlag S. 406 ff. beschrieben ist, solange und so intensiv ausgesetzt wird, bis die Einzelfaser einen feucht-aufgeschlossenen Zustand hat, und das oder die Bindemittel noch nicht wesentlich anreagieren, gleichzeitig jedoch wesentliche Feuchteüberschüsse ausgetrieben sind. Anschließend erfolgt das Trocknen in einem elektrischen Wechselfeld, Formpressen in einem freien Werkzeug und Härten.

Alle bekannten Trocknungsverfahren führen zu Energiekonzentration an den Teileoberflächen, die dort zu Störungen wie Verbrennen, Verspröden, Aufschäumen, Anhärten, Blasenbildungen, Verkrustungen usw. führen und bedürfen darüber hinaus betrieblich kaum beherrschbarer Verweilzeiten in der jeweiligen Anlage. Das erfindungsgemäße Trocknen im elektrischen Wechselfeld hat dagegen diese Nachteile nicht.

Der nunmehr weitgehend trockene, stapelbare, lagerfähige und sehr schmiegsame Vorformling ist für den nächsten Arbeitsschritt vorbereitet. Der vorgetrocknete Vorformling wird in ein siebfreies Heißpreßwerkzeug mit einigen Dampfentlastungsbohrungen eingelegt und kurzzeitig endverpreßt unter relativ geringem Druck bei gegenüber Naßpreßverfahren deutlich reduzierter Temperatur, wobei ein gewisses Quantum Restfeuchte ausgetrieben wird. Dabei wird das oder werden die Bindemittel ausgehärtet bzw. in einem temporären Schmelzzustand übergeführt.

Die Erfindung betrifft demnach die wirtschaftliche Herstellung von formangeschwemmten Fahrzeuginnenverkleidungsträgern aus vorwiegend defibrierten Holzfasern in kurzen Preßzeiten, wobei der Fasersuspension über ein bisher als kritisch angesehenes Maß qualitätsverbessernde Chemikalien und Hilfsstoffe zugesetzt sein dürfen. Die Formkörper sind beidseitig glatt. Schieber oder eine mehrteilige 2. Werkzeughälfte mit hinsichtlich Dauertemperaturbeständigkeit und Druckaufnahme reduzierten Ansprüchen z.B. an bewegliche Komponenten sind einsetzbar. Damit werden Hinterschnitte am Fertigteil möglich. Wenig konstruktive Einengungen der möglichen Formungsfreiheit sind gegeben. Dazu sind die Vorformlinge zwischenlager- und transportfähig.

In bevorzugter Ausführungsform wird nach der Papierherstellungsmethode eine wäßrige Bütte auf der Grundlage von TMP (Thermo mechanical pulp) und/oder CTMP (Chemo-TMP), "Enzyklopädie Naturwissenschaft und Technik" Bd. 2 (1980) Verlag Moderne Industrie, München, S. 1884 und/oder Naturkurzfasern und/oder handelsüblichen Cellulosefasern angesetzt. Bezogen auf diesen Faseranteil werden 5 - 40 Masse-% vorzugsweise 7,5 - 30 Masse % Thermoplaste zugefügt- beispielsweise solche aus der Gruppe der Polyolefine oder Polyamide, in Form von Pulvern und/oder Fasern mit einer vorwiegenden Länge von ca. 4 - 10 mm neben nichtschmelzenden Fasern, wie sie als Polyester-, Polyacrylnitril-, Polyaramidfasern u.a. marktgängig sind- die den Gesamt-Fremdfaseranteil nicht über 40 Masse-% steigen lassen.

Dieser Zusammensetzung können alle weiteren an sich bewährten Hilfsstoffe zugesetzt werden, die Verhalten und Eigenschaften der Suspension bei der Anformung, Entwässerung, Vortrocknung und Verpressung sowie des Fertigproduktes bei Entnahme, Lagerung und technischen Einsatz positiv beeinflussen. Sie bleibend reduziert um den beim Entwässern ausgespülten, berechenbaren Anteile zu ihrer Wirkungsentfaltung im Fertigteil erhalten, weil das Heißpressen nicht mehr mit einem Wasseraustritt durch Siebe zusammenhängt.

Insbesondere werden zugesetzt: Papier- u./o. Nonwovensbinder ggf mit Härter/Vernetzer u./o. Retensions-u./o. Dispergier- u./o. Hydrophobierungsmittel, u./o. Puffersubstanzen u./o. innere Trenn- u./o. Flammschutz-u./o. Antioxydationsmittel sowie Farbstoffe u./o. -pigmente u.a.

Der Ansatz wird auf eine Arbeitskonsistenz von 0,1 - 2,8 Masse%, vorzugsweise 0,2 bis 0,6 Masse-%, bezogen auf seine Gesamtmenge, mit Wasser verdünnt, in bekannter Weise an ein Formsieb, mit der einer Türverkleidung für Fahrzeuge ähnlichen Dimension und Form, angeschwemmt und für ca. 60 - 120 s mit Kalt- oder Heißluft von ca. 10 - 80 MPa zur Entwässerung durchströmt. Der entstandene ca. 12 mm dicke Formling wird mit einem Restwassergehalt von 20 - 50 Masse-% entnommen und in einem Industrie-Durchlauf-Hochfrequenzofen auf 10 - 30 Masse-%, vorzugsweise 15 - 20 Masse-%, jetzt bezogen auf den Anteil natürlicher Fasern, getrocknet und entweder anschließend in noch warmem Zustand bei 100 - 330 MPa und, je nach Erweichungsbereich des zugefügten Thermoplasten, bei 165 ^{o} bis 245 ^{o}C für ca. 35 - 50 s oder nach Lagerung von beispielsweise 10 min bis ca. 330 h im erkalteten Zustand für ca. 45 - 60 s auf eine Wandstärke von ca. 2,0 - 2,5 mm verpreßt und dem Werkzeug entnommen, das die der Türverkleidung genau entsprechende Form und etwa 300 Dampfentlastungsbohrungen, bezogen auf 1 m² Abwicklung- mit einem Durchmesser von ca. 1 mm aufweist.

Dimensionsstabilität und technische Eigenschaften von Fertigteilen, die nach dieser bevorzugten Ausführungsform hergestellt werden, sind immer hervorragend und reproduzierbar.

Die neuen Möglichkeiten, die sich aus der erfindungsgemäßen Arbeitsweise ergeben, sind, daß die Endpreßzeiten gegenüber den bekannten Naßverfahren wesentlich reduziert werden, wobei die dafür notwendige Presse weder räumlich noch zeitlich mit der Anformung gekoppelt sein muß, daß Hinterschnitte und zwei Gutseiten zu verwirklichen sind, daß wesentlich mehr und unterschiedliche qualitätsverbessernde Hilfsstoffe in das Endprodukt einzubringen sind, daß der technische Anspruch an die Werkzeuge geringer und durch mildere Temperaturen und relativ geringen Druck wirtschaftlicher wird bei gleichzeitig gegenüber reinen Trockenpreßverfahren nahezu unbegrenzte Formgestaltungsmöglichkeit der so produzierten Fahrzeuginnenverkleidungsträger.

Es war bisher technisches Vorurteil, daß diese Ziele einheitlich mit Holzfaserformstoffen, die angeschwemmt werden, wirtschaftlich nicht erreichbar seien. Man nahm ferner an, daß Siebformen bei Belastung durch Fremdfasern und Chemikalien verkleben und verstopfen, daß dort keine Schieber einbaubar und Trockenpreßzeiten nicht weiter reduzierbar seien. Es erschien auch nicht möglich, Vorformlinge bis nahe dem natürlichen Endfeuchtegehalt so zu trocknen, daß Bindemittel nicht anspringen und keine Oberflächenstörungen auftreten. Man ging stets davon aus, daß Naßpreßlinge immer sofort verpreßt werden müßten, während lockere Trockenpreßformlinge auch nur trocken zu pressen seien, getrocknete Vorformlinge geschmeidig, lagerfähig und gut endverformbar blieben und daß Trockenpreßverfahren die Formgebungsfreiheit stark einschränken.

Durch die Erfindung wurden dadurch, daß mittels Naßanformtechnik ein kompakter Vorformling entsteht, welcher handhabbar und lagerfähig ist und trockentechnisch verpreßt werden kann, überraschend alle Vorurteile gemeinsam überwunden.

### Beispiel

Eine 50 m³ Stoffbütte wurde mit 0,52 % Feststoff mit folgender Rezeptur
55 Gew TL TMP aus Nadelholz
5 Gew TL Jutefaser 10-20 mm
5 Gew TL Canadische Zellulose
20 Gew TL Polyacrylnitrilfaser, 10,6 mm
15 Gew TL PP-Fasern, 5-15 mm
1,6 Gew TL PE-Wachs
5,0 Gew TL Carboxyliertes Polyethylen in ammoniakalischer Dispersion
1,0 Gew TL Alaun
in Wasser gefahren.

Nach Homogenisierung in einer Naßpreßanlage wurde durch ein Sieb, das in Näherung der Form eines Türverkleidungsträgers entspricht, gespült Als der dort entstandene Stoffniederschlag eine Dicke von 12 - 14 mm erreicht hatte, wurde der Vorgang unterbrochen, das Wasser abgezogen, die Faserlage mit 140 ^{o}C heißer Druckluft mit 18 MPa für 60 s durchströmt, anschließend von einem Stützträger übernommen und in einen Durchlauf-Hochfrequenztrockner mit einer effektiven Leistung von 60 KW gebracht. Nach 1 min betrug die Restfeuchte des Vorformlings 22 Masse-% und seine Temperatur durchschnittlich 85 ^{o}C.

Sofort anschließend wurde der Vorformling in einem Preßwerkzeug, das exakt mit dem Trägerteil der Türverkleidung konturtreu ist und keine Siebseite, sondern 240 Gasentlastungsbohrungen aufwies, bei 230 ^{o}C und 28 bar verpreßt. Nach 50 s wurde das Teil entformt. Es war zu diesem Zeitpunkt dimensionsstabil.

## Patentansprüche

1. Verfahren zur Herstellung stark verformter Fahrzeuginnenverkleidungsträger mit beidseitig glatten Oberflächen auf der Basis defibrierter Holzfasern durch Anschwemmen einer wäßrigen Holzfaserstoffsuspension an ein Vorformsieb, Trocknen des Vorformlings, Pressen und Härten,
**dadurch gekennzeichnet,** daß eine angeschwemmte Faserlage auf einen Restwassergehalt von 20 bis 50 Masse-%, bezogen auf die ursprüngliche Suspensionsmenge, entwässert und in einem elektrischen Wechselfeld getrocknet, dann in einem siebfreien Werkzeug formgepreßt und gehärtet wird.

2. Verfahren nach Anspruch 1,
**dadurch gekennzeichnet,** daß die angeschwemmte und entwässerte Faserlage im elektrischen Wechselfeld auf 10 bis 30 Masse-%, bezogen auf den Anteil natürlicher Fasern, getrocknet wird.

3. Verfahren nach Anspruch 2,
**dadurch gekennzeichnet,** daß die Trocknung im elektrischen Wechselfeld auf eine Restfeuchte von 15 bis 20 Masse-%, bezogen auf den Anteil natürlicher Fasern, vorgenommen wird.

4. Verfahren nach einem der Ansprüche 1 bis 3,
**dadurch gekennzeichnet,** daß ein elektrisches Wechselfeld von Netzfrequenz und einer Leistung von 40 bis 80 kW zur Trocknung der angeschwemmten und entwässerten Faserlage verwendet wird.

## Claims

1. A method of producing highly deformed vehicle interior lining supports with smooth surfaces on both sides on the basis of defibrated wood fibres by washing an aqueous wood fibre pulp suspension on to a premoulding sieve, whereafter the moulding blank is dried, pressed and hardened, characterized in that a washed-on layer of fibres is dewatered to a residual water content of 20 to 50% by weight, referred to the original quantity of suspension, and dried in an electric alternating field, whereafter it is compression moulded and hardened in a sieve-free tool.

2. A method according to claim 1, characterized in that the washed-on and dewatered layer of fibre is dried in the electric alternating field to 10 to 30% by weight, referred to the proportion of natural fibres.

3. A method according to claim 2, characterized in that the drying in the electric alternating field is performed to a residual humidity of 15 to 20% by mass, referred to the proportion of natural fibres.

4. A method according to one of claims 1 to 3, characterized in that an electric alternating field of mains frequency and a power of 40 to 80 kW is used for drying the washed-on and dewatered layer of fibre.

## Revendications

1. Procédé de fabrication d'un support de revêtement intérieur de véhicule fortement déformé ayant de chaque côté une surface lisse, à partir de fibres de bois défibrées, dans lequel on charrie sur un tamis de préformage une suspension aqueuse à base de fibres de bois, on sèche l'ébauche, on la presse et on la durcit, caractérisé en ce qu'on déshydrate une couche de fibres charriée jusqu'à une teneur résiduelle en eau de 20 à 50% en masse, rapportée à la masse de suspension initiale, et on la sèche dans un champ électrique alternatif, puis on la moule et on la durcit dans un outil sans tamis.

2. Procédé suivant la revendication 1, caractérisé en ce que la couche de fibres charriée et déshydratée est séchée dans un champ électrique alternatif jusqu'à 10 à 30% en masse par rapport à la fraction de fibres naturelles.

3. Procédé suivant la revendication 2. caractérisé en ce que le séchage dans le champ électrique alternatif est poursuivi jusqu'à une humidité résiduelle de 15 à 20% en masse par rapport à la fraction de fibres naturelles.

4. Procédé suivant l'une des revendications 1 à 3, caractérisé en ce que, pour le séchage de la couche de fibres charriée et déshydratée, on utilise un champ électrique alternatif ayant la fréquence du réseau et une puissance de 40 à 80 kW.
